(19) Europäisches Patentamt
European Patent Office
Office européen des brevets

(11) Publication number: **0 047 967**
**A1**

# (12) EUROPEAN PATENT APPLICATION

(21) Application number: 81107058.0

(22) Date of filing: 08.09.81

(51) Int. Cl.³: C 08 G 18/32
C 08 L 101/00, C 08 L 57/00
C 08 G 71/04

(30) Priority: 10.09.80 US 185713

(43) Date of publication of application: 24.03.82 Bulletin 82/12

(84) Designated Contracting States: BE CH DE FR GB IT LI NL SE

(71) Applicant: The B.F. GOODRICH Company
Dept. 0015 WHB-6 500 South Main Street
Akron, Ohio 44318(US)

(72) Inventor: Son, Pyong-Nae
2106 Ayers Avenue
Akron Ohio 44313(US)

(74) Representative: von Kreisler, Alek, Dipl.-Chem. et al,
Deichmannhaus am Hauptbahnhof
D-5000 Köln 1(DE)

## (54) High molecular weight piperidine derivatives as UV stabilizers.

(57) Process for preparation of high molecular weight stabilizer compound by reaction of 2,2,6,6-tetraalkylated-4-piperidones with a hydroxyl functional amine; and, thereafter further reaction of the hydroxyl functional portion of the resultant product with a di-isocyanate or a di-acid to yield a high molecular weight product having recurring units with pendant piperidinyl functionality. These high molecular weight polymers and oligomers are especially suitable in the stabilization of polyolefins, (i.e., polypropylene) against degradation by ultra-violet light and are highly resistant, due to their relative size, against extraction from, and migration within, the stabilized polymer.

EP 0 047 967 A1

Croydon Printing Company Ltd

# HIGH MOLECULAR WEIGHT PIPERIDINE DERIVATIVES AS UV STABILIZERS

## BACKGROUND OF THE INVENTION

The Field of the Invention - This invention relates to a novel process, compositions containing the compounds prepared according to this novel process and the novel compounds themselves. More specifically, this invention is directed to a process for the synthesis of high molecular weight stabilizer compounds containing pendant piperidinyl groups and to the methods for use of these compounds.

Description of the Prior Art - Polymers have in the past and continue to provide an attractive substitute for the more traditional types of structural materials (e. g., wood or metals) because of relatively inexpensive materials and fabrication costs. As polymers continue to find new applications in, for example, the fabrication of automotive parts and building materials, they must also become more durable and capable of withstanding prolonged exposure to a variety of degradative forces. Degradation of polymers can be caused by exposure to light, heat, moisture and/or air. Such degradation is usually manifest by either a partial or total loss of structural integrity, changes in light transition properties, changes in color, loss or reduction of flexibility and/or resiliency, or any combination of the above phenomena. Those attempting to avoid polymer degradation have generally selected from among three possible approaches: (a) elimination or reduction of the degradative forces; (b) isolation of the sensitive material from the degradative forces; or (c) modification of the polymer composition to enhance its resistance to the degradative forces. The latter approach is generally preferably since it does not require elaborate engineering nor any structural changes in the polymer product environment.

There are a variety of additives which have been disclosed in the past as suitable for enhancing the

polymers' resistance to one or more of the degradive forces discussed hereinabove. These additives (hereinafter collectively referred to as "stabilizers") can usually be physically combined with or engrafted upon the environmentally sensitive polymer thereby prolonging its useful life in the hostile degradative environment. It is not uncommon for polymers to contain a variety of stabilizing materials, (i.e., a stabilizer package), each being present for prevention of a particular degradative reaction. One of the more difficult to control of the degradative forces is the irradiation of the polymer by ultra-violet light. The impact of such irradiation will, of course, vary depending upon the intensity and duration of exposure, and thus may manifest itself only after a prolonged interval. The irradiation of polymers with ultra-violet light can often times cause cross-linking of these materials, thereby reducing its resiliency and/or impact resistance. Change in color and opacity are often also effected by prolonged exposure of polymers to UV irradiation. While many materials are known and commercially available as stabilizers against ultra-violet light degradation, the degree of protection afforded by such agents is generally concentration-dependent and may be geared to a particular limited class of materials.

The prior art is replete with technical articles and patents directed to resolving this complex problem, see for example, "Photodegradation, Photooxidation and Photostabilization of Polymers", by Ranby and Raybeck, John Wiley and Sons, New York City (1975) at page 369 et seq. A number of hindered amines stabilizers have been previously disclosed as suitable in the prevention of photodegradation of polyolefins, such as polyethylene and polypropylene, see for example, U. S. Patents 4,006,207 and 4,104,248. Each of the above references disclose a piperdidyl functional compound which is suitable in the light stabilization of synthetic materials, such as polypropylene and polyethylene.

In the case of the '207 patent, the stabilizer is a polyurea having piperidinyl functional moieties appended from its backbone. The '248 patent is similar in its disclosure in that the piperdinyl functional moieties are appended from the polymer backbone composed of alkylene groups.

As indicated above, the extent of protection which can be imparted to a photosensitive polymer is often times concentration-dependent; that is, the amount of protection is usually determined by the amount of stabilizer which is capable of incorporation into the sensitive polymer. Where the stabilizer materials are highly effective at low concentrations, the polymer can be protected against degradation without impairment in its physical properties and/or processing characteristics. As the concentration of stabilizer required to effectively protect the polymer against UV degradation increases, there is also the possibility of phase separation of the stabilizer in the polymer and some impairment in its physical characteristics and processability of the resultant composition. This problem is more pronounced where the stabilizing material is itself a polymer. In order to avoid the types of compatibility problems which are associated with with the use of high concentrations of polymer stabilizers, it is desirable to select a stabilizer which is phase compatible with the photosensitive polymer composition. It is, therefore, highly advantageous to have polymer stabilizers which are composed of the same or structurally similar units as the polymer requiring stabilization. Unfortunately, the preparation of polymer stabilizers is often difficult to achieve and even where such stabilizers can be synthesized, their effectiveness is limited because of the difficulty in achieving phase compatibility with the photo-degradable polymer.

## SUMMARY OF THE INVENTION

Accordingly, it is the object of this invention to remedy the above as well as related deficiencies in the prior art.

More specifically, it is the principle object of this invention to provide an effective method for the synthesis of novel polymeric stabilizers which are effective in prevention of UV degradation of photosensitive polymers.

Another object of this invention is to provide a highly effective polymeric stabilizer which is phase compatible with polyurethanes.

It is yet another object of this invention to provide highly effective UV stabilizers which are phase compatible with a variety of polymeric materials and which are capable of achievement of substantial protection against photodegradation at relatively low concentrations.

The above related objects are achieved by providing a high molecular weight piperidinyl functional polymer stabilizer which is prepared by reaction of 2,2,-6,6-tetraalkylated 4-piperidones with a hydroxyl functional amine under reductive alkylation conditions; and, thereafter further reaction of the hydroxyl functional portion of the above intermediate compound with a diisocyanate or a di-acid. The polymeric product that is obtained will have recurring piperidinyl functionality pendant from the recurring units of the polymer. These high molecular weight polymers and oligomers are especially suitable in the stabilization of polymeric materials, such as films and fibers, and are also highly resistant to extraction from and migration within such polymers.

## DESCRIPTION OF THE INVENTION INCLUDING PREFERRED EMBODIMENTS

The novel polymer stabilizers of this invention are prepared by reaction of a cyclic hindered amine, such as 2,2,6,6-tetraalkyl-4-piperidones with a hydroxyl functional amine. The intermidate compound resulting from such reaction can thereafter be further reacted with a diisocyanate or a di-acid to yield a high molecular weight

product.

The alkyl functional piperidone and hydroxyl functional amine are combined in the presence of a platinum catalyst and in a reducing atmosphere under pressure. The reaction is carried out over a period of approximately two to four hours at a temperature in the range of 60-80°C. The reductive alkylation of the amine in the above manner is essentially complete at this point in time and the desired product can be separated from the reaction mass by filtration and the filtrate hereafter concentrated to a syrup. Any of the by-products remaining in this syrupy product can be removed by standard vacuum distillation techniques.

The tetraalkylated piperidones suitable in preparation of the above intermediate can have the following structural formula

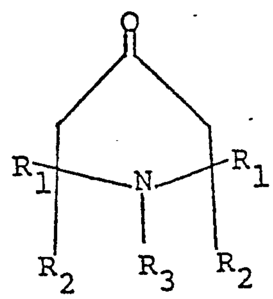

wherein $R_1$ and $R_2$ are independently selected from alkyl radicals of 1-6 carbon atoms and $R_3$ is independently selected from hydrogen and alkyl radicals of 1-6 carbon atoms.

The hydroxyl functional amine which is suitable in preparation of the foregoing intermediate can be represented by the following structural formula

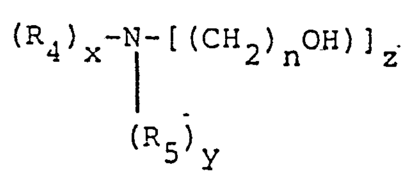

wherein $R_4$ is hydrogen

$R_5$ is $-(CH_2)_nNH_2$, n is 1 to 4, x is 0 or 1, Y is 0 or 1, z is 1 or 2, with the proviso x + y + z = 3.

Once having prepared the intermediate hydroxyl functional compound, it can be further reacted with an appropriate di-isocyanate or di-acid so as to form polymers and oligomers having piperidinyl functional groups appended from its backbone. The di-isocyanate suitable for use in preparation of these high molecular weight stabilizers has the following formula

$$O{=}C{=}N{-}R_5{-}N{=}C{=}O$$

wherein $R_5$ is a divalent organic radical selected from among aliphatic hydrocarbons having 1 to 10 carbon atoms, cyclo aliphatic hydrocarbons having 3 to 10 carbon atoms, polycycloaliphatic aliphatic hydrocarbons having 2 to 20 carbon atoms, alkylene having 2 to 10 carbon atoms, arylene having 3 to 10 carbon atoms, polyarylene having 6 to 20 carbon atoms,

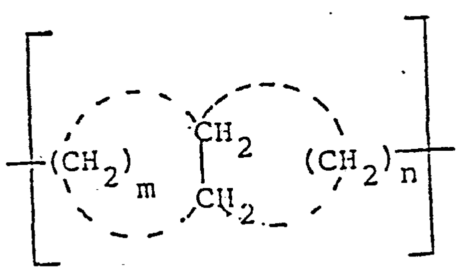

,

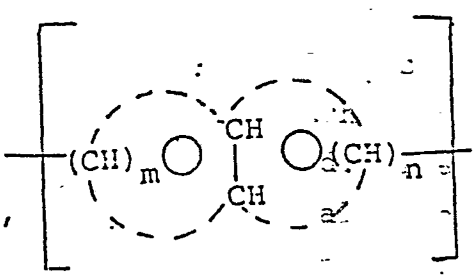

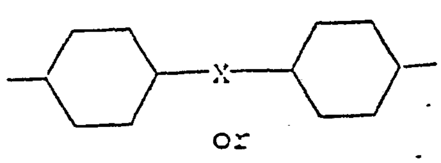

or

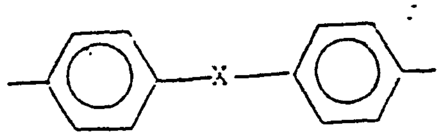

wherein X may be a valence bond, an alkylene radical containing 1 to 5 carbon atoms, NR where R is an alkyl radical, oxygen, sulfur, sulfoxide, sulfone; diisocyanates with m and n being 1 to 4.

Typical aliphatic diisocyanates within the scope of the foregoing formulae include hexamethylene diisocyanate, methylene-bis(4-cyclohexyl isocyanate), isophorone diisocyanates. Typical aromatic diisocyanates within the scope of the foregoing formulae include naphthalene-1,5-diisocyanate, diphenyl methane-4,4'-dissocyanate, tolylene diisocyanate, p-phenylene diisocyanate, dichlorodiphenyl methane diisocyanate, dimethyl diphenyl methane diisocyanate, dibenzyl diisocyanate, diphenyl ether diisocyanate, ditolylene diisocyanate and the like.

The di-acid suitable for use in the preparation of high molecular weight stabilizers include the following acid salts

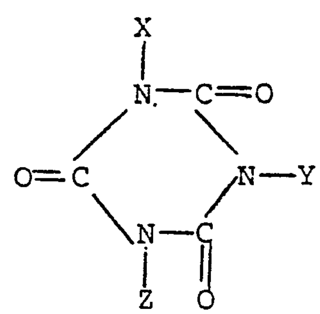

wherein at least one of X, Y and Z are selected from the group consisting of chloride and bromide with the balance being hydrogen.

Acid salts within the foregoing formula which are especially suitable in the context of this invention include cyanuric chloride, cyanuric bromide.

Typically, the intermediate product, (that is the product of the reductive alkylation of the hindered

amine and the hydroxyl functional amine), is combined with an appropriate diisocyanate or di-acid in a nonpolar organic solvent. The reaction is preferably carried out in a chilled environment, i.e. 0°C., and thereafter the reactants allowed to gradually warm to room temperature. The reaction temperatures can be further increased and the reactants allowed to combine further. This step-wise increase in temperature permits a greater degree of control over the manner in which the reactants combine and helps to determine the ultimate structure of the reaction product. After the reaction has gone essentially to completion, the solids which are produced can be separated from the reaction medium by filtration, washed in the conventional manner for removal of impurities and dried. The product that is obtained is thereafter evaluated in the conventional manner in order to determine the effectiveness of such product on UV stabilization of photosensitive polymers. In addition, the samples prepared in this manner are evaluated in order to determine the extent of compatibility of the stabilizer in the photosensitive polymeric matrix.

The Examples which follow further define, describe and illustrate preparation of the method for preparation and evaluation of the compositions of this invention. Parts and percentages appearing in such examples are by weight unless otherwise stipulated. The apparatus used both in the preparation and the evaluation of such compositions are standard or as hereinbefore described.

## EXAMPLE I

Preparation of N-[3-(2,2,6,6-tetramethylpiperidin-4-yl)aminopropyl]diethanolamine

In a 110 ml autoclave were charged 21.6 g (0.124 mole) of 2,2,6,6-tetramethyl-4-piperidone, 30 ml methanol, 20.3 g (0.120 mole) of N-(3-aminopropyl)diethanolamine, and 0.06 g of platinum catalyst (10% on carbon). The reduction was carried out under 1000 psi $H_2$ pressure at 80°C. After 4-1/2 hours the reduction was complete. The catalyst was removed by a filtration and the filtrate was concentrated to leave a yellow thick syrup. By-products were removed at reduced pressure (0.001 mm Hg). A pot residue turned into a solid, which was recrystallized from acetone to isolate 24.9 g (68.9% yield) of white solid. It melted at 108-9°C.

Calculated for $C_{16}H_{35}N_3O_2$: C, 63.74; H, 11.70, N, 13.93. Found: C, 63.68; H, 11.73; N, 13.79.

In another experiment the same reaction was repeated in 0.1 mole scale using 0.10 g of 10% platinum on carbon under 1000 psi hydrogen at 80°C. The reaction was complete within three hours, and the GC of the reaction mixture showed no detectable by-products.

EXAMPLE II

Preparation of N-(2,2,6,6-tetramethylpiperidin-4-yl)diethanaolamine

In a 300 ml autoclave were placed 54.0 g (0.348 mole) of 2,2,6,6-tetramethyl-4-piperidone, 36.8 g (0.35 mole) of diethanolamine, 80 ml of methanol, and 0.2 g of platinum catalyst (10% on carbon). The autoclave was pressurized to 1000 psi with hydrogen gas and heated to 80°C. After seven and half hours, the reaction mixture was terminated.

The reaction mixture was filtered to remove the catalyst and concentrated on an evaporator to leave a clear syrup. This syrup was fractionated under reduced pressure. The fraction which boils at 140-148°C/ 0.04 mm Hg is the desired product.

Calculated for $C_{13}H_{28}N_2O_2$: C, 63.89; H, 11.55; N, 11.46. Found: C, 63.61; H, 11.51; N, 11.38.

EXAMPLE III

Preparation of polymeric stabilizer by reaction of N-[3-(2,2,6,6-tetramethylpiperidin-4-yl)aminopropyl]

diethanolamine with 1,6-hexamethylene diisocyanate (F)

In a 100 ml three-necked flask were placed 3.01 g (0.01 mole) of N-[3-(2,2,6,6-tetramethylpiperidin-4-yl)aminopropyl]diethanolamine and 60 ml methylene chloride. To the cooled solution (0°C) was added 1,6-hexamethylene diisocyanate over the period of 4 min. One drop of stannous octoate was added. After reacting 75 min. at 0°C, the reaction pot temperature was raised to 38°C and maintained at this temperature for 105 min. The reaction was then stirred overnight at r.t.

The following morning methylene chloride was removed from the reaction mixture, leaving a white sticky solid. A hard solid can be obtained by treating the above solid with 15 ml of heptane. After grinding 4.8 g of off-white solid was obtained. The product becomes waxy at 71°C and melts at 84-85°C.

EXAMPLE IV

Preparation of polymeric stabilizer by reaction of N-]3-(2,2,6,6-tetramethylpiperidin-4-yl)aminopropyl] diethanolamine with methylene-di-p-phenylene diisocyanate (MDI) (G)

Following the same procedure as described in Example III 3.01 g (0.01 mole) of N-[3-(2,2,6,6-tetramethylpiperidine-4-yl)aminopropyl]diethanolamine was reacted with 2.08 g (0.0083 mole) of MDI in the presence of 60 ml of methylene chloride and 1 drop of stannous octoate.

After reacting overnight at r.t., a sticky solid was isolated and washed with hexane to give 3.2 g of white solid. The product turns waxy at 130°C and melts at 145°C.

EXAMPLE V

Preparation of polymeric stabilizer by reaction of 2-(2,2,6,6-tetramethylpiperidin-4-yl)aminoethanol with toluene diisocyanate (D)

Following the same procedure as described in

Example III, 0.01 g (0.033 mole) of 2-(2,2,6,6-tetramethylpiperidin-4-yl)aminoethanol was reacted with 5.22 g (0.030 mole) of toluene diisocyanate in 60 ml hexane. The reaction was carried out at 0°C for one and a half hours. The reaction temperature was gradually raised to room temperature and kept at this temperature for one and a half hours. Then, it was further raised to 50°C and maintained at 50°C for one hour and fifty minutes. The reaction was stirred overnight at room temperature, and filtered to isolate 9.3 g of off-white solid. The solid was washed with water to remove impurities, leaving 4.2 g of water insoluble off-white solid. The product does not melt sharply, instead it turns to wax at 178°C and melts at 190°C.

EXAMPLE VI

Preparation of polymeric stabilizer by reaction of 2-(2,2,6,6-tetramethylpiperidin-4-yl)aminoethanol with 1,6-hexamethylene diisocyanate (E)

Following the same procedure as described in Example III 4.0 g (0.02 mole) of 2-(2,2,6,6-tetramethylpiperidin-4-yl)aminoethanol was reacted with 3.03 g (0.010 mole) of 1,6-hexamethylene diisocyanate in 60 ml of hexane. After reacting at 0°C, 22°C, and 50°C for about one and half hours each, the reaction mixture was stirred overnight at room temperature.

The resulting reaction mixture was filtered and the solid so isolated was washed with water and ground to collect 5.1 g of off-white solid. The product softens at 80°C, then melts at 178°C.

The polymeric stabilizers prepared in the manner described in Examples V through VIII are evaluated by incorporation within an appropriate photosensitive resin and the resultant composition thereafter molded into plaques and ultra-thin films. These plaques and films are thereafter subjected to a irradiation with ultra-violet light, exposure to elevated temperatures and extractive solvents.

TABLE

XENON WEATHEROMETER DATA OF POLYPROPYLENE SAMPLES (20 MIL)* CONTAINING HIGH MOLECULAR WEIGHT UV STABILIZERS

| UV STABILIZER | phr | FAILURE TIME (In Hours)** |
|---|---|---|
| None | 0.0 | 320 |
| D | 0.1 | 390 |
| | 0.5 | 940 |
| E | 0.1 | 940 |
| | 0.5 | 4180 |
| F | 0.1 | 940 |
| | 0.5 | 3320 |
| G | 0.1 | 950 |
| | 0.5 | 880 |

*All samples contain 0.1 phr Goodrite 3125, 1,3,5-tris(3,5-di-tert-butyl-4-hydroxyhydrocinnamoyl)hexahydro-s-triazine

**Time to reach 50% loss of the original tensile.

The procedures of Examples III-VI are repeated except for the substitution of the following cyanuric chloride for the diisocyanate. In each instance the product thus obtained is equivalent in performance to the diisocyanate analogue.

CLAIMS

1. A composition comprising a polymer which is sensitive to degradation by ultra-violet light and a stabilizer effective amount of the product of the condensation of a hindered amine of the formula

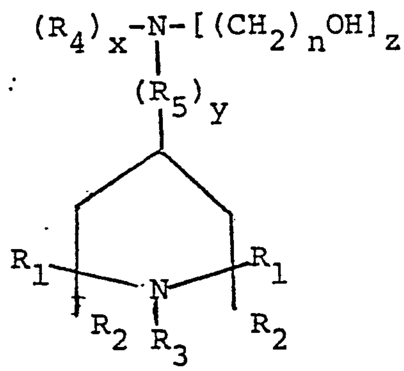

wherein $R_1$ and $R_2$ are independently selected from alkyl radicals of 1-6 carbon atoms and $R_3$ is independently selected from hydrogen and alkyl radicals of 1-6 carbon atoms; and $R_4$ is hydrogen, $R_5$ is $-(CH_2)_nNH_2$ n is 1 to 4, x is 0 or 1, y is 0 or 1, and z is 1 or 2, with the proviso that where z is 2, x is 0.

and a dissocyanate of the formula

$$O{=}C{=}N{-}R_5{-}N{=}C{=}O$$

wherein $R_5$ is a divalent organic radical selected from among aliphatic hydrocarbons having 1 to 10 carbon atoms, cycloaliphatic hydrocarbons having 3 to 10 carbon atoms, polycycloaliphatic aliphatic hydrocarbons having 6 to 20 carbon atoms, alkylene having 2 to 10 carbon atoms, arylene having 3 to 10 carbon atoms, polyarylene having 6 to 20 carbon atoms,

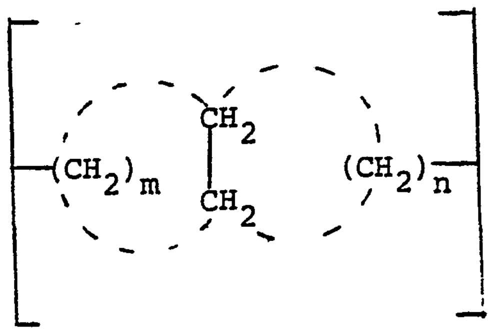 , 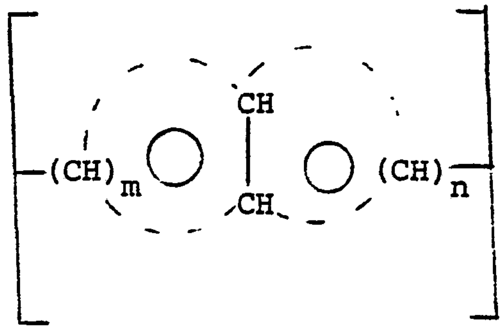

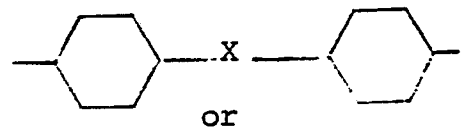

or

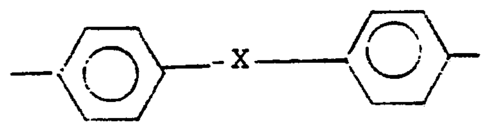

wherein X may be a valence bond, an alkylene radical containing 1 to 5 carbon atoms, NR where R is an alkyl radical, oxygen, sulfur, sulfoxide, sulfone; diisocyanates with m and n being 1 to 4.

2. The composition of claim 1, wherein the hindered amine is N-[3-(2,2,6,6-tetramethylpiperidin-4-yl) aminopropyl]diethanolamine.

3. The composition of claim 1, wherein the hindered amine is N-(2,2,6,6-tetramethylpiperidin-4-yl) diethanaolamine.

4. The composition of claim 1, wherein the diisocyanate is toluene diisocyanate.

5. The composition of claim 1, wherein the diisocyanate is 1,6-hexamethylene diisocyanate.

6. The composition of claim 1, wherein the diisocyanate is methylene-di-p-phenylene diisocyanate.

7. A composition comprising a polymer which is sensitive to degradation by ultra-violet light and a stabilizer effective amount of the product of the condensation of a hindered amine of the formula

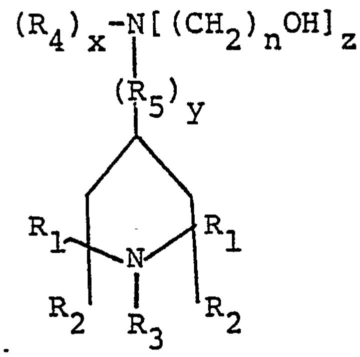

wherein $R_1$ and $R_2$ are independently selected from alkyl radicals of 1-6 carbon atoms and $R_3$ is independently selected from hydrogen and alkyl radicals of 1-6 carbon atoms; and $R_4$ is hydrogen, $R_5$ is $-(CH_2)_nNH_2$. n is 1 to 4, x is 0 or 1, y is 0 or 1, and z is 1 or 2, with the proviso that where z is 2, x is 0.

and a di-acid of the formula

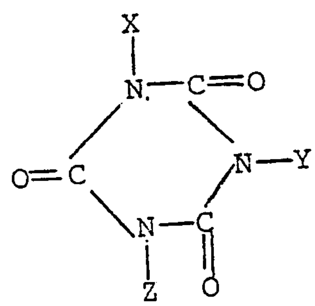

wherein at least one of X, Y and Z are selected from the group consisting of chloride and bromide with the balance being hydrogen.

8. The composition of Claim 7 wherein the hindered amine is N-[2,2,6,6-tetramethylpiperidin-4-yl) aminopropyl]diethanolamine.

9. The composition of Claim 7 wherein the hindered amine is N-(2,2,6,6-tetramethylpiperidin-4-yl) diethanaolamine.

10. The compsition of Claim 7 wherein the di-acid is cyanuric chloride.

11. The composition of Claim 7 wherein the di-acid is cyanuric bromide.

12. A process for the synthesis of high molecular weight stabilizer compounds which comprises:

(a) contacting a hydroxyl functional amine of the formula

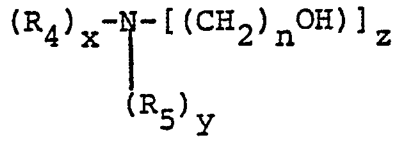

wherein $R_4$ is hydrogen, $R_5$ is $-(CH_2)_nNH_2$ n is 1 to 4, x is 0 to 1, y is 0 or 1, and z is 1 or 2, with the proviso that $x + y + z = 3$.

with a tetralkylated piperidone of the formula

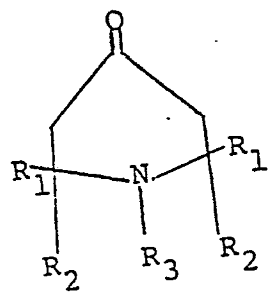

wherein $R_1$ and $R_2$ are independently selected from alkyl radicals of 1-6 carbon atoms and $R_3$ is independently selected from hydrogen and alkyl radicals of 1-6 carbon atoms

under reductive alkylation conditions,

(b) isolating the alkylated amine of step (a), and

(c) condensing the alkylated amine of step (b) with a diisocyanate of the formula

$$O{=}C{=}N{-}R_5{-}N{=}C{=}O$$

wherein $R_5$ is a divalent organic radical selected from among aliphatic

hydrocarbons having 1 to 10 carbon atoms, cycloaliphatic hydrocarbons having 3 to 10 carbon atoms, polycycloaliphatic aliphatic hydrocarbons having 6 to 20 carbon atoms, alkylene having 2 to 10 carbon atoms, arylene having 3 to 10 carbon atoms, polyarylene having 6 to 20 carbon atoms,

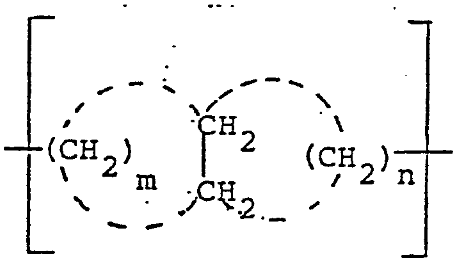 , 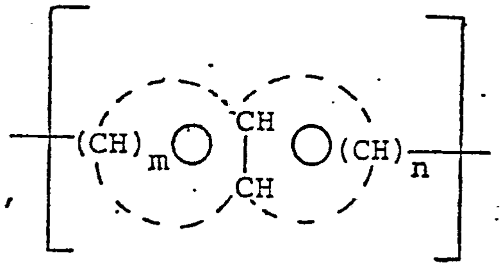

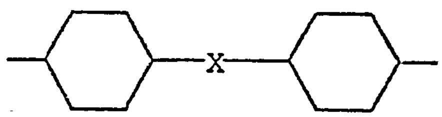

or

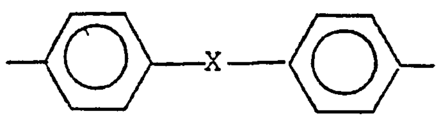

wherein X may be a valence bond, an alkylene radical containing 1 to 5 carbon atoms, NR where R is an alkyl radical, oxygen, sulfur, sulfoxide, sulfone; diisocyanates with m and n being 1 to 4.

13. A process for the synthesis of high molecular weight stabilizer compounds which comprises:

(a) contacting a hydroxyl functional amine of the formula

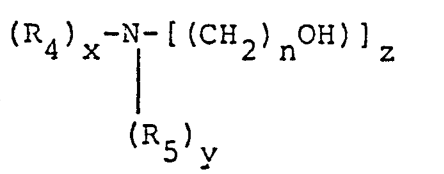

wherein $R_4$ is hydrogen, $R_5$ is $-(CH_2)_nNH_2$ n is 1 to 4, x is 0 or 1, y is 0 or 1, and

z is 1 or 2, with the proviso that $x + y + z = 3$

with a tetralkylated piperidone of the formula

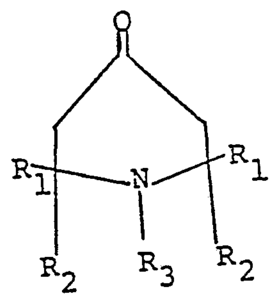

wherein $R_1$ and $R_2$ are independently selected from alkyl radicals of 1-6 carbon atoms and $R_3$ is independently selected from hydrogen and alkyl radicals of 1-6 carbon atoms

under reductive alkylation conditions,

(b) isolating the alkylated amine of step (a), and

(c) condensing the alkylated amine of step (b) with di-acid of the formula

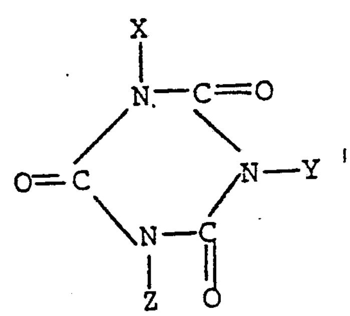

wherein at least one of X, Y and Z are selected from the group consisting of chloride and bromide with the balance being hydrogen.

0047967

European Patent Office

# EUROPEAN SEARCH REPORT

Application number
EP 81 10 7058

## DOCUMENTS CONSIDERED TO BE RELEVANT

| Category | Citation of document with indication, where appropriate, of relevant passages | Relevant to claim |
|---|---|---|
| | FR - A - 2 351 144 (CIBA-GEIGY)<br>* claims; page 47 "Sous ensemble 5b" *<br>--- | 1 |
| | FR - A - 2 351 138 (CIBA GEIGY)<br>* claims *<br>--- | 1 |
| | FR - A - 2 364 936 (BAYER)<br>* claims *<br>--- | 1 |
| A | EP - A - 0 002 005 (CIBA GEIGY)<br>* claims *<br>--- | 1 |
| D,A | US - A - 4 086 207 (PAOLO CASSANDRINI et al.)<br>* claims *<br>--------- | 1 |

CLASSIFICATION OF THE APPLICATION (Int Cl.³)

C 08 G 18/32
C 08 L 101/00
57/00
C 08 G 71/04

TECHNICAL FIELDS SEARCHED (Int. Cl.³)

C 08 L 101/00
57/00
C 08 G 18/32
71/00
71/02
71/04

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 21-12-1981 | MALHERBE |

EPO Form 1503.1 06.78